# EUROPÄISCHE PATENTSCHRIFT

(11) **EP 2 660 039 B1**
(45) Veröffentlichungstag und Bekanntmachung des Hinweises auf die Patenterteilung: **08.08.2018**
(21) Anmeldenummer: 13160277.3
(22) Anmeldetag: 21.03.2013
(51) Int. Cl.: B32B 5/02, B32B 27/12, B41N 10/04, B41N 10/06

(54) **Verbundschichtmaterial**
Composite sheet material
Matériau à couches composites

(30) Priorität: 02.05.2012 DE 102012103827
(43) Veröffentlichungstag der Anmeldung: 06.11.2013
(73) Patentinhaber: ContiTech Elastomer-Beschichtungen GmbH, 30165 Hannover (DE)
(72) Erfinder: Lindentahl, Gabriele, 37154 Northeim (DE); Passon-Wesseloh, Barbara, 37073 Göttingen (DE); Löschner, Jens, 37120 Bovenden (DE); Pinto Maia, Rodrigo, 37077 Göttingen (DE); Fuchs, Jürgen, 37154 Northeim (DE)
(74) Vertreter: Preusser, Andrea

(56) Entgegenhaltungen:
- EP-A1- 2 361 784
- WO-A1-94/02259
- DE-C- 689 614
- DE-C1- 4 323 128
- DE-T2- 69 230 944
- DE-U1-202009 004 009
- GB-A- 1 307 230
- US-A- 4 048 368
- US-A- 5 066 537
- "Hybrid-Gewebe", Suter Kunststoffe AG , 1 February 2001 (2001-02-01), CH-3303 Jegenstorf Retrieved from the Internet: URL:https://www.swiss-composite.ch/pdf/t-h ybridgewebe.pdf [retrieved on 2017-03-10]

## Beschreibung

Die Erfindung betrifft ein Verbundschichtmaterial mit zumindest einer Kunststoffschicht und zumindest einer Festigkeitsträgerlage, aufweisend zumindest ein textiles Flächengebilde aus Kett- und Schussfäden, wobei das textile Flächengebilde in Richtung der Kettfäden bei einer Kraft von 500 N/5 cm eine geringe Dehnung von 0,5 bis 1,2 % mit Probekörpern gemäß DIN EN ISO 13934-1/3 aufweist, wobei es sich bei dem Verbundschichtmaterial (1) um ein elastisches Digitaldrucktuch (1) handelt, wobei die Kunststoffschicht (5) eine farbübertragende, elektrisch leitfähige Schicht ist.

Derartige Verbundschichtmaterialien sind beispielsweise elastomerbeschichtete Gewebe, Transportbänder, Antriebsriemen oder Drucktücher, die im Digital- oder Offsetdruck eingesetzt werden. Dabei können auch mehrere Kunststoffschichten und Festigkeitsträgerlagen vorgesehen werden. Unter dem Begriff Kunststoff sind dabei alle polymeren Werkstoffe gemäß DIN 7724 zu verstehen, insbesondere Elastomere, thermoplastische Elastomere und Thermoplaste.

Als Festigkeitsträgerlagen werden oft textile Flächengebilde eingesetzt, die in Richtung der Kettfäden eine geringe Dehnung und ein geringes Kriechverhalten aufweisen, da die Verbundschichtmaterialien oft als umlaufende Bänder eingesetzt werden, die sich in der Umlaufrichtung während des Betriebs nicht längen sollen. Eine Längung des Verbundschichtmaterials ist würde oftmals Eigenschaftseinbußen nach sich ziehen.

Für Drucktücher werden als Festigkeitsträgerlagen beispielsweise Stapelfasergewebe aus Baumwolle, Baumwollmischgewebe, Polyester oder Viskose eingesetzt. Dabei ist es bekannt, die Festigkeitsträgerlagen in Kett- und Schussrichtung mit unterschiedlicher Dehnbarkeit auszubilden, wobei die Kettfäden zumeist in Umlaufrichtung verlaufen. In der EP 1 268 218 B1 wird allerdings ein Drucktuch beschrieben, bei dem die Schussfäden in Umfangsrichtung des Druckzylinders verlaufen. Auch Drucktücher mit Hybridgeweben, die z. B. Glasfasern enthalten, sind aus dem Stand der Technik wie beispielsweise der DE 20 62 015, der WO 94/02259 A1 oder der DE 689 19 783 T2 bekannt.
Weitere Drucktücher mit unterschiedlichen textilen Flächengebilden sind in der GB 1 307 230 A, der US 4 048 368 A, der DE 692 30 944 T2 und der DE 20 2009 004009 U1 beschrieben.
Verbundschichtmaterialien der eingangs genannten Art in Form von Digitaldrucktüchern sind aus der EP 2 361 784 A1 bekannt.
Für unterschiedliche Anwendungsbereiche der Verbundschichtmaterialien ist es aber zwischenzeitlich mehr und mehr gewünscht, dass in einer Richtung, vorzugsweise der Umlaufrichtung bei umlaufenden Verbundmaterialien, eine äußerst geringe Dehnung unter Zugbelastung und ein geringes Kriechen bei erhöhter Temperatur vorliegt, wohingegen in der dazu senkrechten Richtung, vorzugsweise der axialen Richtung bei umlaufendem Einsatz, eine hohe Elastizität und Verformbarkeit vorliegt, um beispielsweise die Montage zu erleichtern oder gewünschte Ausformungen während des Betriebs zu erreichen. Die bekannten Verbundschichtmaterialien werden diesen Anforderungen nicht immer gerecht.
Der Erfindung liegt daher die Aufgabe zu Grunde, ein Verbundschichtmaterial bereitzustellen, welches in der einen Richtung im Betrieb keine Längung unter Zugbelastung aufweist und in der anderen, dazu senkrechten Richtung eine ausgesprochen hohe Elastizität und Formbarkeit aufweist.
Gelöst wird diese Aufgabe erfindungsgemäß durch die Merkmale des kennzeichnenden Teils das Anspruchs 1.
Bei dem Verbundschichtmaterial kriecht das textile Flächengebilde in Richtung der Kettfäden nicht, d. h. die Längung eines Probekörpers gemäß DIN EN ISO 13934-1/3 unter statischer Last von 1000 N/5 cm über 24 h bei Raumtemperatur beträgt weniger als 1 mm und über 24 h bei 150 °C weniger als 3 mm, und das textile Flächengebilde weist in Richtung der Schussfäden bei einer Kraft von 500 N/5 cm eine hohe Dehnung von 10 bis 17 % mit Probekörpern gemäß DIN EN ISO 13934-1/3 und eine Elastizität von mehr als 2 %, ermittelt mit Hystereseprüfung mit Probekörpern gemäß DIN EN ISO 13934-1/3 bei einer Wechsellast zwischen 50 und 200 N/5 cm bei 100 Zyklen, auf.

Die Elastizität von textilen Faserstoffen beschreibt dabei die Fähigkeit nach einer Dehnung wieder ohne Hilfe von außen in Richtung Ursprungslänge zurückzukehren. Sie wird in Prozent der Dehnung angegeben.

Das erfindungsgemäße Verbundschichtmaterial bietet den Vorteil, dass es sich bei langem Gebrauch auch bei erhöhten Temperaturen in seinen Umlaufeigenschaften in Richtung der Kettfäden nicht verändert, bei Transportbändern, Riemen oder umlaufenden Digitaldrucktüchern beispielsweise kein Durchhängen auftritt, und sich das Material beispielsweise beim Aufbau auf Maschinen oder Haltevorrichtungen leicht seitlich ziehen lässt und so eingespannt werden kann. Darüber hinaus ist das Verbundschichtmaterial in Kettrichtung vor Schäden durch Knick- oder Scherbelastung geschützt. Auch Klemmungen, wie Schienen beschädigen die Garne in Kettrichtung nicht mehr.
Bei Verwendung dieser textilen Flächengebilde entfällt außerdem bei der Textilvorbereitung ein zusätzlicher Reckprozess, so dass die Herstellung verfahrenstechnisch einfacher und kostengünstiger wird.

Besonders gute Eigenschaften werden mit dem Verbundschichtmaterial erzielt, wenn das textile Flächengebilde in Richtung der Kettfäden bei einer Kraft von 500 N/5 cm eine geringe Dehnung von 0,5 bis 0,9 % mit Probekörpern gemäß DIN EN ISO 13934-1/3 aufweist.

Werden besonders hohe Anforderungen an die Verformbarkeit des Verbundschichtmaterials in Richtung der Schussfäden gefordert, hat es sich als vorteilhaft erwiesen, wenn das textile Flächengebilde in Richtung der Schussfäden bei einer Kraft von 500 N/5 cm eine hohe Dehnung von 15 bis 17 % mit Probekörpern gemäß DIN EN ISO 13934-1/3 aufweist.

Als textile Flächengebilde für das Verbundschichtmaterial werden unterschiedliche textile Materialien, wie Gewirke, Gestricke oder Gewebe eingesetzt, wobei diese in Kett-und Schussrichtung die angegebenen Eigenschaften aufweisen müssen. Es handelt sich bei dem textilen Flächengebilde um ein Hybridgewebe, welches in Kettrichtung die geringen Änderungen bei Belastung aufweist und in Schussrichtung hoch dehnbar ist.

Als mögliche Materialien für die Kettfäden des Hybridgewebes können unterschiedliche Fäden eingesetzt werden. Es werden hochfeste Fäden/Filamente mit hoher kristalliner Struktur, bevorzugt Aramide, und/oder aus anorganischem Material, wie Glas, Metall, Basalt oder Keramik, eingesetzt. Diese Materialien bieten zusätzlich den Vorteil, dass sie auch hohe Temperaturbelastungen von mehr als 175 °C stand halten. Innerhalb des Hybridgewebes können auch Hybridgarne oder Hybridcorde verwendet werden.

Bei den Schussfäden kann es sich um beliebige Materialien aus der Textilindustrie wie native oder Polymerfasern handeln. Die hohe Dehnbarkeit der Festigkeitsträgerlage in Schussrichtung wird durch Schussfäden aus hochelastischem Material erreicht. Dabei kann bei kann es sich beispielsweise um Polyamid, Polyester, Baumwolle, Viskose, m-Aramide oder typische Elastofasern (Chemiefasern, welche extrem dehnbar sind und nach Aufhebung der Zugkraft weitgehend in den ursprünglichen Zustand zurückkehren) handeln, je nach gewünschter Temperatur-, Umwelt- und Medienbeständigkeitsanforderungen ausgewählt werden können.

Parallel dazu kann die hohe Dehnung in Richtung der Schussfäden durch Schussfäden mit hochelastischer Garn- oder Zwirnkonstruktion, wie Polyamid-Zwirn oder texturiertes Polyamidgarn, erreicht werden.

Gemäß einer bevorzugten Weiterbildung der Erfindung ist zwischen der zumindest einen Kunststoffschicht und der zumindest einen Festigkeitsträgerlage zumindest eine kompressible Zwischenschicht angeordnet. Es können auch mehrere kompressible Schichten vorgesehen werden, insbesondere wenn auch mehrere Festigkeitsträgerlagen vorhanden sind. Der Einsatz von kompressiblen Zwischenschichten ermöglicht die Einstellung einer gezielten Komprimierbarkeit, die insbesondere im Drucktuchbereich von Wichtigkeit ist.

Bei dem Verbundschichtmaterial kann es sich um elastomerbeschichtete Gewebe, z. B. für flexible Abdeckungen oder Tanks, um Transportbänder oder um Antriebsriemen handeln.

Gemäß der Erfindung handelt es sich allerdings um ein elastisches Drucktuch, insbesondere ein Drucktuch für den Digital- oder Offsetdruck.
Der übliche Aufbau eines Drucktuches für den Digital- oder Offsetdruck besteht aus einer oder mehreren Festigkeitsträgerlagen, die ggf. über Haftschichten miteinander verbunden sind, einer kompressiblen, in der Regel Gaseinschlüsse aufweisenden Zwischenschicht und einer Deckplatte, die elektrisch leitfähig sein kann. Auf die Deckplatte können noch weitere Schichten, wie z. B. Lackschichten, aufgebracht sein.
Die kompressible Zwischenschicht ermöglicht die Einstellung einer gezielten Komprimierbarkeit, die eine definierte Farbübertragung auf das zu bedruckende Material (Bedruckstoff) ermöglicht. Außerdem weist ein kompressibles Drucktuch eine hohe Beständigkeit gegen mechanische Deformationen (z. B. so genannte Papierknautscher) während des Druckvorganges auf. Die kompressible Zwischenschicht besteht in der Regel aus einer mikrozelligen Schicht aus Gummi oder einem gummiähnlichen Werkstoff.
Die Deckplatte, die unter anderem quellbeständig sein und ein gutes Farbübertragungsvermögen aufweisen muss, basiert in der Regel auf einer Synthesekautschukmischung, häufig Nitrilkautschukmischung. Bei Digitaldrucktüchern basiert die Deckplatte oftmals auf Polyurethan als Bindemittel, da sich damit besonders dünne elektrisch leitfähige Schichten erzeugen lassen.
Gemäß der Erfindung handelt es sich bei dem Drucktuch um ein Digitaldrucktuch, welches mit den erfindungsgemäßen Merkmalen in große Digitaldruckmaschinen eingespannt werden kann und eine lange Maßhaltigkeit in Umlaufrichtung aufweist.
Für den Digitaldruck ist die Kunststoffschicht eine farbübertragende, elektrisch leitfähige Schicht, da die Farbe beim Digitaldruck über elektrostatische Aufladung auf das Drucktuch aufgebracht wird. Auf diese elektrisch leitfähige Schicht können weitere Schichten aufgebracht sein.

Zur Optimierung der Produktqualität in Bezug auf die Oberflächenstruktur und -reinheit ist es von Vorteil, wenn das Drucktuch eine die Festigkeitsträgerlage abdeckende, nach außen weisende Rückseitenbeschichtung aufweist.

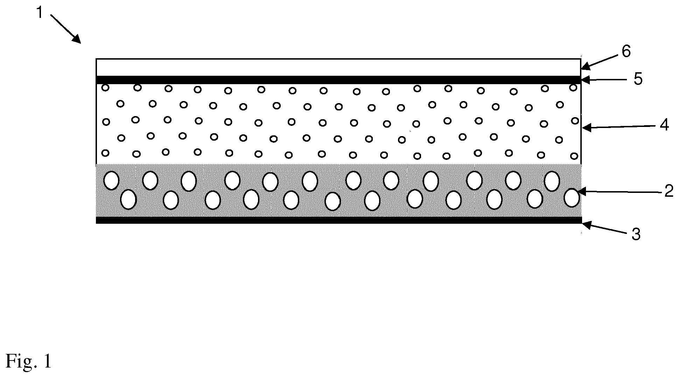

Anhand eines Ausführungsbeispiels soll die Erfindung näher erläutert werden, ohne auf dieses Beispiel beschränkt zu sein. Es zeigt
- Fig. 1: den schematischen Aufbau eines erfindungsgemäßen Verbundschichtmaterial im Schnitt

Die Fig. 1 zeigt den Aufbau eines erfindungsgemäßen Verbundschichtmaterials 1, hier speziell eines Drucktuches 1 für den Digitaldruck, im Schnitt. Das Drucktuch 1 weist eine Festigkeitsträgerlage 2 aus einem Gewebe auf und ist an der Unterseite mit einer Rückseitenbeschichtung 3 versehen. Oberhalb der Festigkeitsträgerlage 2 ist eine kompressible Zwischenschicht 4 angeordnet, die mit der Festigkeitsträgerlage 2 verklebt ist. Oberhalb der kompressiblen Zwischenschicht 4 ist eine elektrisch leitfähige Kunststoffschicht 5 angeordnet. Oberhalb der elektrisch leitfähigen Kunststoffschicht 5 befindet sich noch eine nicht elektrisch leitfähige Schicht 6, die beispielsweise auf Polyurethan oder Nitrilkautschuk basieren kann.

Das Gewebe der Festigkeitsträgerlage 2 weist als Kettfäden Glasfilamentgarne mit der Feinheit (Titer) 680 dtex und einer Fadendichte von 18 Fäden/cm auf. Bei den Schussfäden handelt es sich um ein Polyamid 6.6 Garn in hochelastischer Ausführung mit einer Feinheit von 78x6 dtex.
Dieses Gewebe zeigt in Richtung der Kettfäden bei einer Kraft von 500 N/5 cm eine Dehnung von 0,5 % mit Probekörpern gemäß DIN EN ISO 13934-1/3, in Schussrichtung beträgt die Dehnung unter gleichen Bedingungen 16,7 %. Die Elastizität in Schussrichtung ermittelt mit Hystereseprüfung mit Probekörpern gemäß DIN EN ISO 13934-1/3 bei einer Wechsellast zwischen 50 und 200 N/5 cm bei 100 Zyklen beträgt 2,3 %. Ferner weist es ein Kriechverhalten in Kettrichtung an einem Probekörper gemäß DIN EN ISO 13934-1/3 unter statischer Last von 1000 N/5 cm über 24 h bei Raumtemperatur von 0,8 mm und über 24 h bei 150 °C von 2,8 mm auf.

Ein Drucktuch mit einem derartigen Gewebe als Festigkeitsträgerlage zeigt beim Digitaldruck eine hohe Lebensdauer bei hervorragendem Druckbild und lässt sich leicht auf unterschiedlichsten Digitaldruckanlagen montieren. Zusätzlich ist es durch die verwendeten Fadenmaterialien temperaturbeständig bis zu 175 °C.

### Bezugszeichenliste

### (Teil der Beschreibung)

- 1: Verbundschichtmaterial, Drucktuch
- 2: Festigkeitsträgerlage
- 3: Rückseitenbeschichtung
- 4: kompressible Zwischenschicht
- 5: elektrisch leitfähige Kunststoffschicht
- 6: nicht elektrisch leitfähige Schicht

## Patentansprüche

1. Verbundschichtmaterial (1) mit zumindest einer Kunststoffschicht (5) und zumindest einer Festigkeitsträgerlage (2), aufweisend zumindest ein textiles Flächengebilde aus Kett- und Schussfäden, wobei das textile Flächengebilde in Richtung der Kettfäden bei einer Kraft von 500 N/5 cm eine geringe Dehnung von 0,5 bis 1,2 % mit Probekörpern gemäß DIN EN ISO 13934-1/3 aufweist, wobei es sich bei dem Verbundschichtmaterial (1) um ein elastisches Digitaldrucktuch (1) handelt, wobei die Kunststoffschicht (5) eine farbübertragende, elektrisch leitfähige Schicht ist,
**dadurch gekennzeichnet, dass**
- das textile Flächengebilde ein Hybridgewebe ist,
- das textile Flächengebilde in Richtung der Kettfäden nicht kriecht, d. h. die Längung eines Probekörpers gemäß DIN EN ISO 13934-1/3 unter statischer Last von 1000 N/5 cm über 24 h bei Raumtemperatur weniger als 1 mm und über 24 h bei 150 °C weniger als 3 mm beträgt, wobei das Hybridgewebe Kettfäden mit hoher kristalliner Struktur und/oder Kettfäden aus anorganischem Material aufweist,
- und das textile Flächengebilde in Richtung der Schussfäden bei einer Kraft von 500 N/5 cm eine hohe Dehnung von 10 bis 17 % mit Probekörpern gemäß DIN EN ISO 13934-1/3 und eine Elastizität von mehr als 2 %, ermittelt mit Hystereseprüfung mit Probekörpern gemäß DIN EN ISO 13934-1/3 bei einer Wechsellast zwischen 50 und 200 N/5 cm bei 100 Zyklen, aufweist, wobei die hohe Dehnung in Richtung der Schussfäden durch Schussfäden aus hochelastischem Material erreicht wird.

2. Verbundschichtmaterial (1) nach Anspruch 1, **dadurch gekennzeichnet, dass** das textile Flächengebilde in Richtung der Kettfäden bei einer Kraft von 500 N/5 cm eine geringe Dehnung von 0,5 bis 0,9 % mit Probekörpern gemäß DIN EN ISO 13934-1/3 aufweist.

3. Verbundschichtmaterial (1) nach Anspruch 1 oder 2, **dadurch gekennzeichnet, dass** das textile Flächengebilde in Richtung der Schussfäden bei einer Kraft von 500 N/5 cm eine hohe Dehnung von 15 bis 17 % mit Probekörpern gemäß DIN EN ISO 13934-1/3 aufweist.

4. Verbundschichtmaterial (1) nach zumindest einem der vorhergehenden Ansprüche,
**dadurch gekennzeichnet, dass** die hohe Dehnung in Richtung der Schussfäden durch Schussfäden mit hochelastischer Garn- oder Zwirnkonstruktion erreicht wird.

5. Verbundschichtmaterial (1) nach zumindest einem der vorhergehenden Ansprüche,
**dadurch gekennzeichnet, dass** zwischen der zumindest einen Kunststoffschicht (5) und der zumindest einen Festigkeitsträgerlage (2) zumindest eine kompressible Zwischenschicht (4) angeordnet ist.

6. Verbundschichtmaterial (1) nach zumindest einem der vorhergehenden Ansprüche,
**dadurch gekennzeichnet, dass** es eine die Festigkeitsträgerlage (2) abdeckende, nach außen weisende Rückseitenbeschichtung (3) aufweist.

## Claims

1. Laminated material (1) with at least one plastic layer (5) and at least one reinforcement layer (2) comprising at least one hybrid textile fabric of warp and weft threads, the hybrid fabric threads having a low elongation of 0.5 to 1.2% in the direction of the warp threads at a force of 500 N/5 cm with test pieces according to DIN EN ISO 13934-1/3, the laminated material (1) being an elastic digital printing cloth (1), the plastic layer (5) being a colour-transferring, electrically conductive layer,
**characterized in that**
- the textile fabric is a hybrid woven fabric,
- the textile fabric does not creep in the direction of the warp threads, i.e. the lengthening of a test piece according to DIN EN ISO 13934-1/3 under a static load of 1000/5 cm over 24 hours at room temperature is less than 1 mm and over 24 hours at 150°C is less than 3 mm, the hybrid woven fabric comprising warp threads with a high crystalline structure and/or warp threads of inorganic material,
- and the textile fabric has a high elongation of 10 to 17% in the direction of the weft threads at a force of 500 N/5 cm with test pieces according to DIN EN ISO 13934-1/3 and an elasticity of more than 2%, determined by hysteresis testing with test pieces according to DIN EN ISO 13934-1/3 under an alternating load of between 50 and 200 N/5 cm in 100 cycles, the high elongation in the direction of the weft threads being achieved by weft threads of highly elastic material.

2. Laminated material (1) according to Claim 1,
**characterized in that** the textile fabric has a low elongation of 0.5 to 0.9% in the direction of the warp threads at a force of 500 N/5 cm with test pieces according to DIN EN ISO 13934-1/3.

3. Laminated material (1) according to Claim 1 or 2,
**characterized in that** the textile fabric has a high elongation of 15 to 17% in the direction of the weft threads at a force of 500 N/5 cm with test pieces according to DIN EN ISO 13934-1/3.

4. Laminated material (1) according to at least one of the preceding claims, **characterized in that** the high elongation in the direction of the weft threads is achieved by weft threads with a highly elastic yarn or twisted yarn construction.

5. Laminated material (1) according to at least one of the preceding claims, **characterized in that** at least one compressible intermediate layer (4) is arranged between the at least one plastic layer (5) and the at least one reinforcement layer (2).

6. Laminated material (1) according to at least one of the preceding claims, **characterized in that** it has an outwardly facing back coating (3), covering the reinforcement layer (2).

## Revendications

1. Matériau en couches composite (1) avec au moins une couche en matière plastique (5) et au moins une couche d'éléments de résistance (2), présentant au moins un article plat textile en fils de chaîne et de trame, dans lequel l'article plat textile présente dans la direction des fils de chaîne sous une force de 500 N/5 cm un faible allongement de 0,5 à 1,2 % avec des échantillons selon DIN EN ISO 13934-1/3, dans lequel le matériau en couches composite (1) est un blanchet d'impression numérique élastique (1), dans lequel la couche en matière plastique (5) est une couche électriquement conductrice transférant la couleur, **caractérisé en ce que**
- l'article plat textile est un tissu hybride,
- l'article plat textile n'est pas sujet au fluage dans la direction des fils de chaîne, c'est-à-dire que l'allongement d'un échantillon selon DIN EN ISO 13934-1/3 sous une charge statique de 1000 N/5 cm pendant 24 heures à la température ambiante vaut moins de 1 mm et pendant 24 heures à 150°C moins de 3 mm, dans lequel le tissu hybride présente des fils de chaîne avec une haute structure cristalline et/ou des fils de chaîne en matériau inorganique,
- et l'article plat textile présente dans la direction des fils de trame sous une force de 500 N/5 cm un allongement élevé de 10 à 17 % avec des échantillons selon DIN EN ISO 13934-1/3 et une élasticité de plus de 2 % déterminée par un essai d'hystérésis avec des échantillons selon DIN EN ISO 13934-1/3 sous une charge alternée entre 50 et 200 N/5 cm à 100 cycles, dans lequel l'allongement élevé dans la direction des fils de trame est atteint par des fils de trame en matériau hautement élastique.

2. Matériau en couches composite (1) selon la revendication 1, **caractérisé en ce que** l'article plat textile présente dans la direction des fils de chaîne sous une force de 500 N/5 cm un faible allongement de 0,5 à 0,9 % avec des échantillons selon DIN EN ISO 13934-1/3.

3. Matériau en couches composite (1) selon la revendication 1 ou 2, **caractérisé en ce que** l'article plat textile présente dans la direction des fils de trame sous une force de 500 N/5 cm un allongement élevé de 15 à 17 % avec des échantillons selon DIN EN ISO 13934-1/3.

4. Matériau en couches composite (1) selon au moins une des revendications précédentes, **caractérisé en ce que** l'allongement élevé dans la direction des fils de trame est atteint par des fils de trame ayant une structure de fil ou torsadée hautement élastique.

5. Matériau en couches composite (1) selon au moins une des revendications précédentes, **caractérisé en ce qu'**au moins une couche intermédiaire compressible (4) est disposée entre ladite au moins une couche en matière plastique (5) et ladite au moins une couche d'éléments de résistance (2).

6. Matériau en couches composite (1) selon au moins une des revendications précédentes, **caractérisé en ce qu'**il présente un revêtement arrière (3) tourné vers l'extérieur et recouvrant la couche d'éléments de résistance (2).
